(19) Europäisches Patentamt / European Patent Office / Office européen des brevets

(11) **EP 3 172 609 B1**

(12) **EUROPÄISCHE PATENTSCHRIFT**

(45) Veröffentlichungstag und Bekanntmachung des Hinweises auf die Patenterteilung:
**11.07.2018 Patentblatt 2018/28**

(21) Anmeldenummer: **15738126.0**

(22) Anmeldetag: **21.07.2015**

(51) Int Cl.:
**G02B 21/00** *(2006.01)* **G02B 27/00** *(2006.01)*

(86) Internationale Anmeldenummer:
**PCT/EP2015/066649**

(87) Internationale Veröffentlichungsnummer:
**WO 2016/012450 (28.01.2016 Gazette 2016/04)**

(54) **MIKROSKOP MIT KORREKTIONSEINHEIT ZU KORRIGIEREN EINES VERÄNDERLICHEN SPHÄRISCHEN ABBILDUNGSFEHLERS**

MICROSCOPE HAVING CORRECTION UNIT FOR CORRECTING A VARIABLE SPHERICAL ABERRATION

MICROSCOPE COMPRENANT UNE UNITÉ DE CORRECTION DESTINÉE À CORRIGER UNE ABERRATION SPHÉRIQUE VARIABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.07.2014 DE 102014110208**

(43) Veröffentlichungstag der Anmeldung:
**31.05.2017 Patentblatt 2017/22**

(73) Patentinhaber: **Leica Microsystems CMS GmbH 35578 Wetzlar (DE)**

(72) Erfinder:
• **SCHULZ, Christian**
  **35606 Solms (DE)**
• **SCHUMANN, Christian**
  **35392 Gießen (DE)**
• **GONSCHIOR, Cornell**
  **61169 Friedberg (DE)**
• **BAUER, Tobias**
  **61462 Königstein / Ts. (DE)**

(74) Vertreter: **Schaumburg und Partner Patentanwälte mbB Postfach 86 07 48 81634 München (DE)**

(56) Entgegenhaltungen:
**DE-A1-102005 034 441 US-A- 5 978 155 US-A1- 2006 291 039**

**Beschreibung**

Die Erfindung betrifft ein Mikroskop mit mindestens einer in einem Strahlengang angeordneten Korrektionseinheit zum Korrigieren eines veränderlichen sphärischen Abbildungsfehlers.

Wird mit einem Mikroskop in eine biologische Probe hineinfokussiert, so können durch eine Brechungsindexfehlanpassung verursachte sphärische Abbildungsfehler auftreten, die in Abhängigkeit der Probentiefe variieren. Diese Abbildungsfehler führen zu einer Verringerung von Auflösung und Kontrast. Außerdem begrenzen sie zusammen mit dem Arbeitsabstand des Objektivs sowie der in der Probe auftretenden Absorption und Streuung die maximale Eindringtiefe in die Probe.

Zum Zwecke der Korrektion sphärischer Abbildungsfehler existieren Objektive, die einen Korrekturring aufweisen, der eine Linsengruppe innerhalb des Objektivs längs der optischen Achse verschiebt. Die der Korrektion dienende Linsengruppe muss beim optischen Entwurf des Objektivs berücksichtigt werden. In der Regel ist sie nur mit einem hohen mechanischen Aufwand zu realisieren. Insbesondere ist es nicht möglich, ein Objektiv nachträglich mit einer solchen Korrektionseinheit auszustatten.

In der EP 0 859 259 A2 wird zum Zweck der Korrektion sphärischer Abbildungsfehler vorgeschlagen, zwischen Objektiv und Tubuslinse Adapterstücke anzuordnen, die aus miteinander verkitteten Linsen bestehen und mit deren Hilfe ein veränderlicher sphärischer Abbildungsfehler eingeführt bzw. kompensiert werden kann. Die vorgeschlagene Anordnung direkt über dem Objektiv ändert jedoch im Allgemeinen die Abgleichlänge des Gesamtsystems. Des Weiteren sind die genannten Adapterstücke aufgrund der unterschiedlichen Pupillengrößen von Objektiven unterschiedlicher Brennweite zwangsläufig objektivspezifisch auszubilden.

Die US 8 659 827 B2 offenbart ein im Unendlich-Strahlengang angeordnetes verstimmbares Afokal-System, das sphärische Abbildungsfehler einführen bzw. kompensieren kann. Da dieses Afokal-System in einem Bereich des Strahlengangs angeordnet ist, in dem Licht gleichzeitig zu verschiedenen Feldpunkten propagiert, muss das System für ein komplettes Sehfeld korrigiert sein. Dies schränkt die erzielbare Korrektionswirkung stark ein.

Die WO 2012/025349 A1 zeigt ein Korrektionssystem, das lateral zueinander verschiebbare Freiformflächen zur Kompensation sphärischer Abbildungsfehler aufweist. Die für dieses Korrektionssystem benötigten Freiformflächen sind jedoch kompliziert gestaltet und deshalb teuer in der Fertigung.

In der US 2006/291039 A1 ist ein Abtastmikroskop mit einem Strahlteiler und einem als Abtastmodul fungierenden Galvanometerspiegel offenbart, zwischen denen sich eine Korrektionseinheit zum Korrigieren eines sphärischen Abbildungsfehlers befindet. Der Korrektionseinheit ist ein Kollimator vorgeordnet, der das von einer Laserlichtquelle als divergenten Strahl ausgesendete Licht zu einem kollimierten Lichtstrahl formt. Die Korrektionseinheit befindet sich somit in einem kollimierten Bereich des Strahlengangs, in dem sie sich zur Korrektion des Abbildungsfehlers längs der optischen Achse bewegen lässt. Weiterer Stand der Technik ist bekannt aus US5978155 und DE102005034441. Aufgabe der Erfindung ist es, ein Mikroskop eingangs genannter Art so weiterzubilden, dass eine Korrektion eines veränderlichen sphärischen Abbildungsfehlers, insbesondere eines durch eine Brechungsindexfehlanpassung verursachten Abbildungsfehlers, zuverlässig und mit einfachen technischen Mitteln möglich ist.

Die Erfindung löst diese Aufgabe durch das Mikroskop mit den Merkmalen des Anspruchs 1.

Erfindungsgemäß umfasst die in dem Mikroskop vorgesehene Korrektionseinheit mindestens ein optisches Korrektionselement, das in einem konvergenten oder divergenten Bereich des Strahlengangs längs der optischen Achse verschiebbar angeordnet ist. Das optische Korrektionselement weist mindestens eine Korrektionsfläche auf, deren von dem konvergenten oder divergenten Bereich des Strahlengangs durchsetzter Teil einen korrektionswirksamen Flächenabschnitt bildet, dessen radiale Ausdehnung quer zur optischen Achse durch Verschieben des Korrektionselementes längs der optischen Achse änderbar ist.

Indem die Erfindung vorsieht, das Korrektionselement in einem konvergenten oder divergenten Bereich des Strahlengangs axial zu verschieben, kann der optisch wirksame Flächenabschnitt der Korrektionsfläche nach Belieben variiert werden, um die Wellenfront des durch das Korrektionselement tretenden Lichtbündels in der gewünschten Weise zu beeinflussen. Insbesondere kann so die durch den korrektionswirksamen Flächenabschnitt des Korrektionselementes verursachte Deformation der Wellenfront genau so eingestellt werden, dass der durch eine Brechungsindexfehlanpassung verursachte Wellenfrontfehler kompensiert wird. Das Korrektionselement kann hierzu als einzelnes optisches Element oder als eine Linsengruppe odern ein Kittglied ausgestaltet sein.

Die axiale Verschiebung des Korrektionselementes kann manuell oder motorisch erfolgen. Auch kann eine Steuerung vorgesehen werden, welche die Einstellung des Korrektionselementes mittels eines Steuerprogramms vornimmt.

Weiterhin kann die erfindungsgemäße Korrektionseinheit auch so gestaltet sein, dass sie mehrere verschiedene Korrektionselemente enthält, die wechsel- oder schaltbar vorgehalten werden. Das Wechseln oder Schalten dieser Korrektionselemente kann wiederum manuell, motorisiert oder auch durch Anwendung eines Steuerprogramms erfolgen.

Vorzugsweise ist das Korrektionselement ein asphärisches, refraktives Element, z.B. eine um die optische Achse rotationssymmetrische, asphärische Linse, die aus einem lichtbrechenden Material, vorzugsweise einem optischen Glas, gefertigt ist.

Das Korrektionselement kann aber auch aus einem diffraktiven Element gebildet sein, z.B. einer Fresnel-Zonenplatte oder einem Hologramm.

Vorzugsweise ist das Korrektionselement achromatisiert. Jedoch ist es ebenso möglich, ein nicht-achromatisiertes Element einzusetzen. Naturgemäß gilt dies insbesondere dann, wenn mit schmalbandigem Licht oder gar monochromatischem Laserlicht gearbeitet wird.

Es lässt sich der durch eine Brechungsindexfehlanpassung induzierte Wellenfrontfehler analytisch wie folgt angeben:

$$\Psi(\rho) = dn_1 \left[ \sqrt{\frac{n_2^2}{n_1^2} - \rho^2 \sin^2 \alpha} - \sqrt{1 - \rho^2 \sin^2 \alpha} \right],$$

worin $n_1$ und $n_2$ die Brechungsindizes der aneinander grenzenden Medien bezeichnen, während p die relative Radialkoordinate in der Objektivpupille, $\alpha$ den Öffnungswinkel des Objektivs und d die Eindringtiefe in das Medium mit dem Brechungsindex $n_2$ bezeichnet.

Dieser Wellenfrontfehler lässt sich nun beispielsweise in sogenannte Zernike-Polynome entwickeln, wie dies beispielsweise ausgeführt in P. Török, P. Varga, G. Nemeth, "Analytical solution of the diffraction integrals and interpretation of wave-front distortion when light is focused through a planar interface between materials of mismatched refractive indices", J. Opt. Soc. Am. A., Vol 12, Np. 12, 2660-2671 (1995) beschrieben ist. Die niedrigste Ordnung dieser Entwicklung entspricht gerade der Defokussierung, die durch die Brechungsindexfehlanpassung induziert wird und in Fachkreisen auch unter der Bezeichnung "fish tank effect" bekannt ist. Dagegen entsprechen die höheren Ordnungen einem nicht nachfokussierbaren Abbildungsfehler. Dieser zu kompensierende Wellenfrontfehler kann als Grundlage für die Auslegung der Oberflächenform des Korrektionselements dienen.

Vorzugsweise ist die Oberflächenform der Korrektionsfläche auf Grundlage einer Polynom-Entwicklung darstellbar. Die gewünschte Wellenfrontdeformation des Lichtes beim Durchgang durch das Korrektionselement und damit die gewünschte Oberflächenform des Korrektionselementes lassen sich nun durch eine Parametrisierung auf Basis der vorstehend genannten rotationssymmetrischen Zernike-Polynome angeben. Es ist jedoch darauf hinzuweisen, dass die genannte Polynom-Entwicklung nicht speziell auf Basis von Zernike-Polynomen erfolgen muss, sondern auch andere Polynom-Entwicklungen angewandt werden können.

Die Korrektionsfläche ist aus einem elliptischen Paraboloid gebildet, dessen Scheitel vorzugsweise auf der optischen Achse liegt. In einem die optische Achse enthaltenen Schnitt hat die Korrektionsfläche dann die Form einer Parabel.

Die Korrektionsfläche ist dergestalt ausgebildet, dass die durch Verschieben des Korrektionselementes längs der optischen Achse verursachte Veränderung des korrektionswirksamen Flächenabschnitts den durch eine Brechungsindexfehlanpassung erzeugten sphärischen Abbildungsfehler korrigiert. Dies bedeutet, dass in dieser Ausführungsform bei axialer Verschiebung des Korrektionselementes keine Defokussierung zusätzlich zu der durch die Brechungsindexfehlanpassung in der Probe entstehende Defokussierung eingeführt wird.

In einer weiteren vorteilhaften Ausgestaltung ist die Korrektionseinheit mit einem vorzugsweise automatisierten Fokussierantrieb wirkungsmäßig gekoppelt, der eine durch die axiale Verschiebung des Korrektionselementes verursachte Defokussierung kompensiert. So lässt sich die durch die axiale Verschiebung des Korrektionselementes eingeführte Defokussierung beispielsweise rechnerisch unter Berücksichtigung der Oberflächenform der Korrektionsfläche berechnen. Der Fokussierantrieb kann dann in Abhängigkeit der rechnerisch bestimmten Defokussierung angesteuert werden, so dass eine entsprechende, kompensierende Nachfokussierung vorgenommen wird.

Vorzugsweise enthält das erfindungsgemäße Mikroskop eine Anpassungsoptik, die dem Korrektionselement in dem Strahlengang nachgeordnet und derart ausgebildet ist, dass sie das durch das Korrektionselement tretende Lichtbündel kollimiert. Durch diese Integration einer kollimierenden Anpassungsoptik in die Korrektionseinheit es möglich, im Rahmen einer Nachrüstung die Korrektionseinheit ohne großen Aufwand in einen kollimierten Mikroskopstrahlengang einzusetzen.

In einer besonders bevorzugten Ausführungsform ist die genannte Anpassungsoptik zudem derart ausgebildet, dass der Bündelquerschnitt des durch das Korrektionselement tretenden Lichtbündels an die Größe einer Objektivpupille anpassbar ist. Dadurch kann die Korrektionseinheit nach Belieben auf unterschiedliche Objektive ausgelegt werden.

Vorzugsweise umfasst die Anpassungsoptik ein Zoomsystem, mit dem sich der Bündelquerschnitt des durch das Korrektionselement tretenden Lichtbündels kontinuierlich verändern lässt. Die Zoomeinstellung kann manuell, motorisiert oder mit Hilfe eines Steuerprogramms erfolgen.

Anstelle eines Zoomsystems können auch diskret schaltbare optische Baugruppen eingesetzt werden, die eine stufenweise Anpassung des Bündelquerschnitts ermöglichen.

Vorzugsweise enthält das erfindungsgemäße Mikroskop ein optisches Element zum Erzeugen des konvergenten oder divergenten Bereichs des Strahlengangs. Dieses Element kann beispielsweise mit einer Lichtleitfaser realisiert werden, deren unkollimierter Faserausgang für die gewünschte Beeinflussung des Strahlengangs sorgt. Es ist jedoch ebenso möglich, anstelle einer Lichtleitfaser eine oder mehrere geeignete Linsen einzusetzen, die den konvergenten bzw. divergenten Bereich des Strahlengangs erzeugen.

Das erfindungsgemäße Mikroskop ist ein Scan- oder Abtastmikroskop, insbesondere ein Konfokalmikroskop oder ein Multiphotonenmikroskop. Im Falle eines Konfokalmikroskops ist die Korrektionseinheit vorzugsweise zwischen einem Hauptstrahlteiler und einem Abtastsystem angeordnet. Da an der genannten Stelle des Konfokalmikroskops nur Achsstrahlen zu betrachten sind, vereinfacht sich der optische Entwurf des Korrektionselementes erheblich. Es ist jedoch ebenso möglich, die Korrektionseinheit zwischen einer Lichtquelle und dem Abtastmodul oder zwischen einem Detektor und dem Abtastmodul anzuordnen. Auch können zwei erfindungsgemäße Korrektionseinheiten vorgesehen werden, von denen eine zwischen der Lichtquelle und dem Abtastmodul und die andere zwischen dem Detektor und dem Abtastmodul angeordnet ist. In einem Multiphotonenmikroskop befindet sich die erfindungsgemäße Korrektionseinheit vorzugsweise zwischen der Lichtquelle und dem Abtastmodul.

Die Erfindung wird im Folgenden anhand verschiedener Ausführungsbeispiele unter Bezugnahme auf die Figuren näher erläutert.

Figur 1  eine schematische Darstellung einer erfindungsgemäßen Korrektionseinheit mit einem asphärischen Korrektionselement, das in verschiedenen axialen Stellungen in einem konvergenten Bereich eines Mikroskopstrahlengangs angeordnet ist;

Figur 2  eine schematische Darstellung, in der die Beeinflussung des Bündelquerschnitts eines durch das asphärische Korrektionselement tretenden Lichtbündels mittels einer Anpassungsoptik veranschaulicht ist;

Figur 3  eine schematische Darstellung eines Konfokalmikroskops, bei dem die erfindungsgemäße Korrektionseinheit zwischen einem Hauptstrahlteiler und einem Abtastmodul angeordnet ist;

Figur 4  eine schematische Darstellung eines Konfokalmikroskops, bei dem sowohl zwischen einer Lichtquelle und einem Hauptstrahlteiler als auch zwischen einem Detektor und dem Hauptstrahlteiler jeweils eine erfindungsgemäße Korrektionseinheit angeordnet ist; und

Figur 5  ein Multiphotonenmikroskop, bei dem zwischen einer Lichtquelle und einem Abtastmodul eine erfindungsgemäße Korrektionseinheit angeordnet ist.

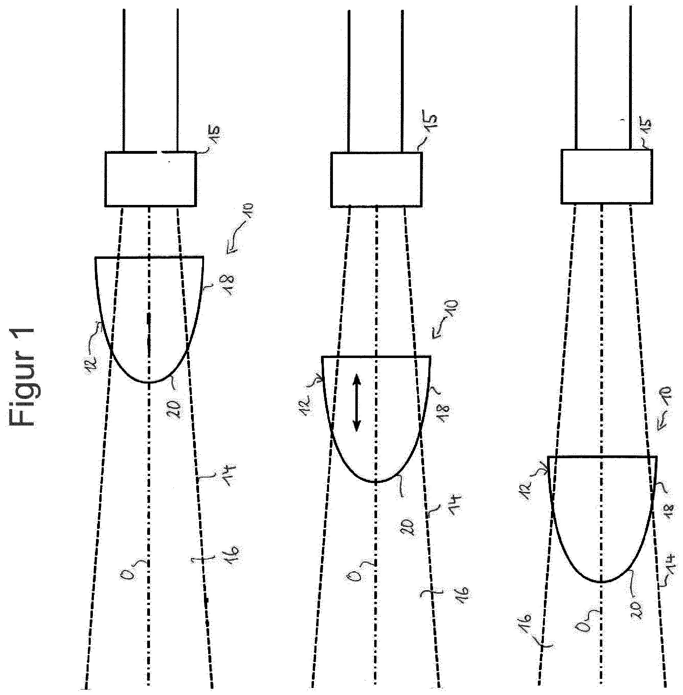

Figur 1 zeigt eine allgemein mit 10 bezeichnete Korrektionseinheit, die für die Verwendung in einem Lichtmikroskop vorgesehen ist. Die Korrektionseinheit 10 dient dazu, einen in dem Lichtmikroskop infolge einer Brechungsindexfehlanpassung auftretenden sphärischen Abbildungsfehler, der abhängig von der Probentiefe variiert, zu korrigieren.

Die Korrektionseinheit 10 umfasst ein optisches Korrektionselement 12 und Anpassungsoptik 15. Das Korrektionselement 12 ist in einem Bereich 14 des Mikroskopstrahlengangs angeordnet, in dem die Randstrahlen eines auf das Korrektionselement 12 fallenden Lichtbündels 16 zur optischen Achse O hin zusammenlaufen.

Das Korrektionselement 12 ist in dem vorliegenden Ausführungsbeispiel ein aus einem lichtbrechenden Material, z.B. optischem Glas, bestehendes Linsenelement, das auf seiner dem einfallenden Lichtbündel 16 zugewandten Seite eine asphärische Linsenfläche 18 aufweist. Die asphärische Linsenfläche 18 ist hat die Form eines elliptischen Rotationsellipsoids, dessen Scheitel auf der optischen Achse O liegt. In dem in Figur 1 gezeigten, die optische Achse enthaltenden Schnitt hat die asphärische Linsenfläche 18 somit die Form einer Parabel.

Die asphärische Linsenfläche 18 bildet eine Korrektionsfläche, die nur in ihrem mittleren Flächenabschnitt, durch den die optische Achse O verläuft, von dem konvergenten Bereich 14 des Strahlengangs durchsetzt wird, während die achsenfernen Randabschnitte der Korrektionsfläche 18 radial außerhalb des konvergenten Bereichs 14 des Strahlengangs angeordnet sind. Der von dem konvergenten Bereich 14 des Strahlengangs durchsetzte Teil der Korrektionsfläche 18 wird im Folgenden als korrektionswirksamer Flächenabschnitt 20 bezeichnet.

Die Erfindung sieht nun vor, das Korrektionselement 12 längs der optischen Achse O zu verschieben, um die radiale Abmessung des zentralen, korrektionswirksamen Flächenabschnitts 20 quer zur optischen Achse O in Abhängigkeit des zu korrigierenden sphärischen Abbildungsfehlers zu variieren. Dieses Variieren des korrektionswirksamen Flächenabschnitts 20 ist in Figur 1 für drei verschiedene axiale Positionen des Korrektionselementes 12 veranschaulicht. So ist der Figur 1 zu entnehmen, dass sich der zur optischen Achse O rotationssymmetrische, asphärische Flächenabschnitt 20 infolge der Konvergenz des Strahlengangbereichs 14 radial nach außen hin vergrößert, wenn das Korrektionselement entgegen der Lichtrichtung (in Figur 1 von rechts nach links) längs der optischen Achse O bewegt wird. Da sich mit Variieren des korrektionswirksamen Flächenabschnitts 20 die durch das Korrektionselement 12 erzielte Korrektionswirkung ändert, lässt sich ein mit der Probentiefe veränderlicher Abbildungsfehler durch eine geeignete Positionierung des Korrektionselementes 12 längs der optischen Achse O korrigieren.

Die in der Korrektionseinheit 10 enthaltene Anpassungsoptik 15 hat die Funktion, das durch das Korrektionselement 12 getretene Lichtbündel 16 zu kollimieren, so dass der Strahlengang nach Austritt aus der Anpassungsoptik 15 parallel gerichtet ist. Die Anpassungsoptik 15 dient ferner dazu, den Querschnitt des Lichtbündels 16 an die Größe einer Pupille des in Figur 1 nicht gezeigten Mikroskopobjektivs anzupassen.

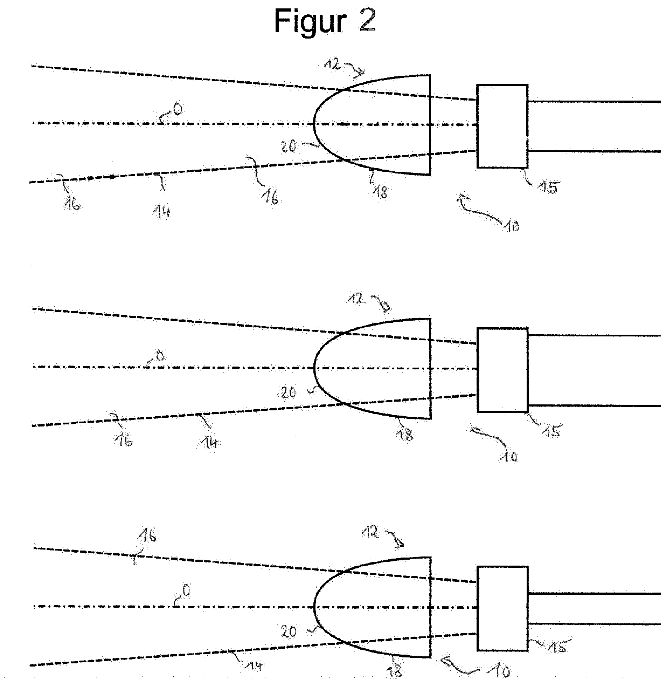

In dem vorliegenden Ausbildungsbeispiel ist die Anpassungsoptik 15 ein Zoomsystem, mit dem sich der Bündelquerschnitt des kollimierten Lichtbündels 18 kontinuierlich variieren lässt. In Figur 2 sind drei verschiedene Zoomeinstellungen der Anpassungsoptik 15 und die entsprechenden Bündelquerschnitte des aus der Anpassungsoptik 15 austretenden Lichtbündels 16 veranschaulicht.

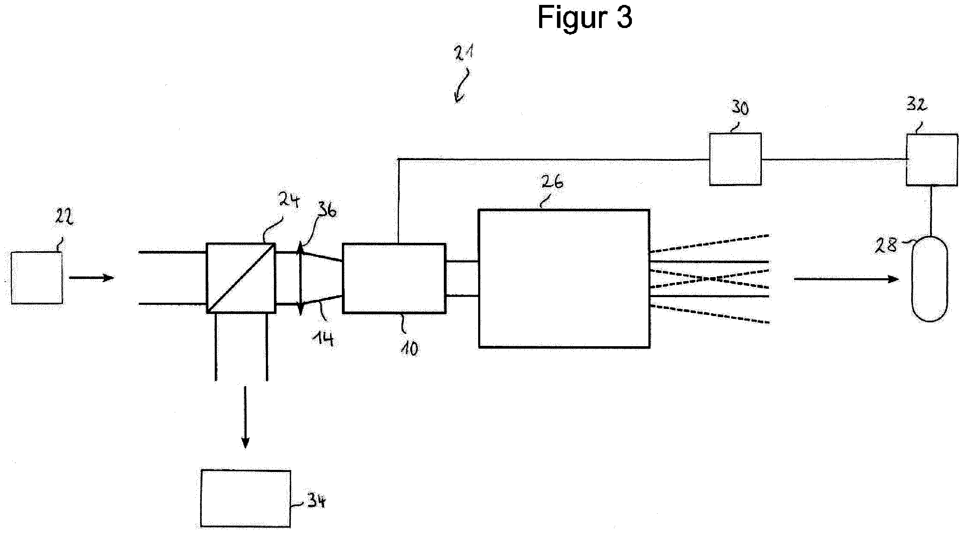

In den Figuren 3 bis 5 sind rein beispielhaft verschiedene Anwendungsmöglichkeiten der Korrektionseinheit 10 gezeigt.

Figur 3 zeigt rein schematisch 4 ein Konfokalmikroskop 20, das eine Lichtquelle 22, einen Hauptstrahlteiler 24, ein Abtastmodul 26, ein Objektiv 28, eine Steuerung 30, einen Fokussierantrieb 32 sowie einen Detektor 34 umfasst. Ferner ist in dem Konfokalmikroskop 20 die vorstehend unter Bezugnahme auf die Figuren 1 und 2 beschriebene Korrektionseinheit 10 vorgesehen, der eine Sammellinse 36 vorgeordnet ist. Die Sammellinse 36 erzeugt den konvergenten Bereich 14 des Strahlengangs, in dem das Korrektionselement 12 der Korrektionseinheit 10 axial verschoben wird. In dem in Figur 3 gezeigten Anwendungsbeispiel ist die Korrektionseinheit 10 zwischen dem Hauptstrahlteiler 24 und dem Abtastmodul 26 angeordnet.

Die Steuerung 30 hat unter anderem die Funktion, das Korrektionselement 12 in Abhängigkeit des zu korrigierenden sphärischen Abbildungsfehlers beispielsweise über einen geeigneten Motor axial in dem konvergenten Bereich 14 des Strahlengangs zu verschieben. Über die Steuerung 30 ist die Korrektionseinheit 10 auch mit dem Fokussierantrieb 32 gekoppelt. Durch diese Ankopplung der Korrektionseinheit 10 an den Fokussierantrieb 32 kann eine Defokussierung, die durch die axiale Verschiebung des Korrektionselementes 10 verursacht wird, kompensiert werden, indem der Fokussierantrieb 32 unter der Kontrolle der Steuerung 30 veranlasst wird, eine entsprechende Nachfokussierung vornimmt. Dies erfolgt beispielsweise auf Grundlage eines von der Steuerung 30 ausgegebenen Steuersignals, in das die durch das Korrektionselement 12 verursachte Defokussierung eingeht. So lässt sich die Defokussierung beispielsweise rechnerisch aus der Oberflächenform der asphärischen Korrektionsfläche 18 sowie der axialen Verschiebung des Korrektionsgliedes 12 bestimmen.

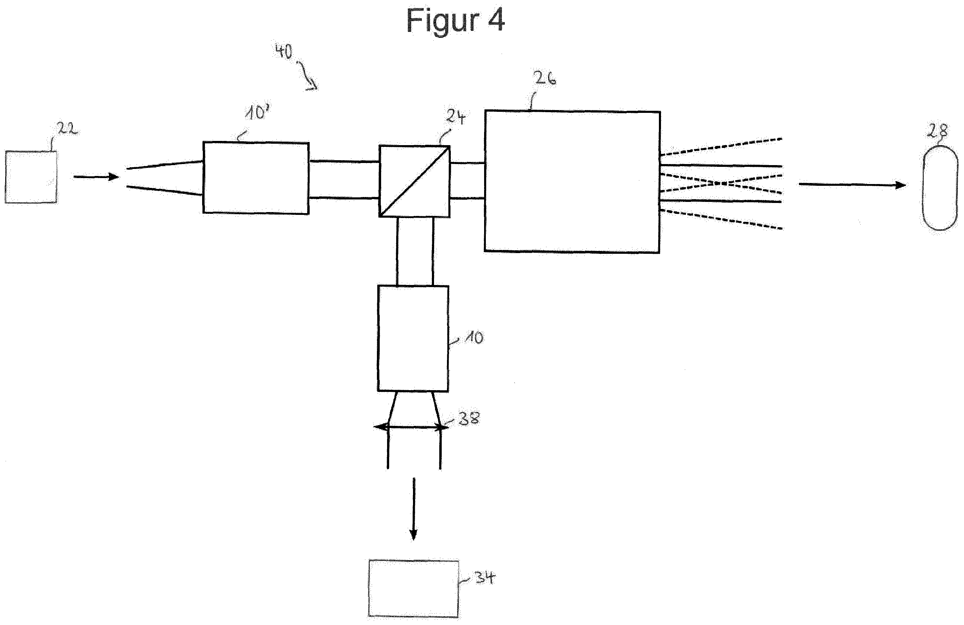

Figur 4 zeigt ein weiteres Anwendungsbeispiel, nämlich ein Konfokalmikroskop 40, das zwei erfindungsgemäße Korrektionseinheiten 10 und 10' aufweist. Im Übrigen sind in Figur 4 diejenigen Mikroskopkomponenten, die den in Figur 3 gezeigten Komponenten entsprechen, mit den gleichen Bezugszeichen versehen.

Bei dem Konfokalmikroskop 40 nach Figur 4 befindet sich die erste Korrektionseinheit 10' in dem Strahlengang 12 zwischen der Lichtquelle 22 und dem Hauptstrahlteiler 24.

Da in dem gezeigten Beispiel das von der Lichtquelle 22 ausgesendete Lichtbündel divergent in die erste Korrektionseinheit 10' eintritt, ist letztere gegenüber der in Figur 1 dargestellten Korrektionseinheit, die ein konvergentes Lichtbündel empfängt, im Hinblick auf ihre (in Figur 4 nicht explizit gezeigte) Anpassungsoptik modifiziert. So ist die Anpassungsoptik der Korrektionseinheit 10' darauf ausgelegt, nicht ein konvergentes, sondern ein divergentes Lichtbündel in ein kollimiertes Bündel umzuformen.

Die in dem Strahlengang zwischen dem Hauptstrahlteiler 24 und dem Detektor 34 angeordnete zweite Korrektionseinheit 10 entspricht wiederum der in Figur 1 gezeigten Einheit. Der zweiten Korrektionseinheit 10 ist eine Sammellinse 38 nachgeordnet, die das aus der Korrektionseinheit 10 austretende divergente Lichtbündel kollimiert.

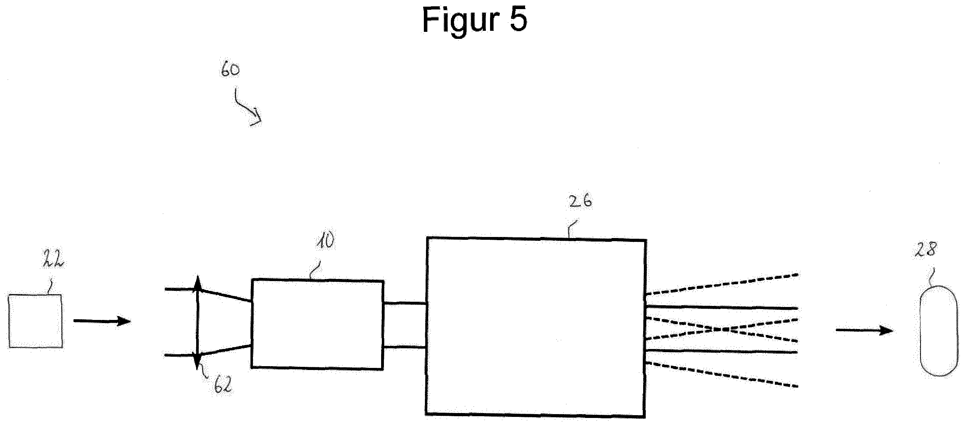

Figur 5 zeigt wiederum rein schematisch ein Multiphotonenmikroskop 60, bei dem die Korrektionseinheit 10 nach Figur 1 zwischen der Lichtquelle 22 und dem Abtastmodul 26 angeordnet ist. Der Korrektionseinheit 10 ist eine Sammellinse 62 vorgeordnet, die das von der Lichtquelle 22 ausgesendete kollimierte Lichtbündel in ein konvergentes Bündel umformt, auf das dann die Korrektionseinheit 10 in der beschriebenen Weise einwirkt, um den sphärischen Abbildungsfehler zu korrigieren.

Es ist darauf hinzuweisen, dass die in den Figuren 3 bis 5 gezeigten Anwendungen rein beispielhaft zu verstehen sind und sich in verständiger Weise modifizieren und ergänzen lassen, ohne das erfindungsgemäße Korrektionskonzept zu verlassen. Beispielsweise wurde weiter oben die Ankopplung der Korrektionseinheit 10 an den Fokussierantrieb 32 nur für das Anwendungsbeispiel nach Figur 3 erläutert. Es versteht sich von selbst, dass auch die in den Figuren 4 und 5 dargestellten Beispiele um eine solche Ankopplung ergänzt werden können.

**Patentansprüche**

1. Mikroskop (21, 40, 60) mit mindestens einer in einem Strahlengang angeordneten Korrektionseinheit (10) zum Korrigieren eines veränderlichen sphärischen Abbildungsfehlers,
   wobei das Mikroskop ein Abtastmikroskop ist, in dem die mindestens eine Korrektionseinheit (10) zwischen einem

**EP 3 172 609 B1**

Hauptstrahlteiler (24) und einem Abtastmodul (26) angeordnet ist, oder

das Mikroskop ein Abtastmikroskop ist, in dem die mindestens eine Korrektionseinheit (10) zwischen einer Lichtquelle (22) und einem Abtastmodul (26) und/oder zwischen einem Detektor (34) und dem Abtastmodul (26) angeordnet ist, **dadurch gekennzeichnet, dass** die Korrektionseinheit (10) mindestens ein optisches Korrektionselement (12) umfasst, das in einem konvergenten oder divergenten Bereich (14) des Strahlengangs längs der optischen Achse (O) verschiebbar angeordnet ist, und

das optische Korrektionselement (12) mindestens eine Korrektionsfläche (18) aufweist, deren von dem konvergenten oder divergenten Bereich (14) des Strahlengangs durchsetzter Teil einen korrektionswirksamen Flächenabschnitt (20) bildet, dessen radiale Ausdehnung quer zur optischen Achse (O) durch Verschieben des Korrektionselementes (12) längs der optischen Achse (O) änderbar ist,

wobei die Korrektionsfläche (18) aus einem elliptischen Paraboloid gebildet und dergestalt ausgebildet ist, dass die durch Verschieben des Korrektionselementes (12) längs der optischen Achse (O) verursachte Änderung des korrektionswirksamen Flächenabschnitts (20) den durch eine Brechungsindexfehlanpassung erzeugten sphärischen Abbildungsfehler korrigiert.

2. Mikroskop (21, 40, 60) nach Anspruch 1, **dadurch gekennzeichnet, dass** das Korrektionselement (12) ein asphärisches refraktives Element oder ein diffraktives Element ist.

3. Mikroskop (21, 40, 60) nach Anspruch 1, **dadurch gekennzeichnet, dass** die Oberflächenform der Korrektionsfläche (18) des asphärischen refraktiven Elements auf Grundlage einer Polynom-Entwicklung darstellbar ist.

4. Mikroskop (21, 40, 60) nach einem der vorhergehenden Ansprüche, **dadurch gekennzeichnet, dass** die Korrektionsfläche (18) rotationssymmetrisch um die optische Achse (O) ausgebildet ist.

5. Mikroskop (21, 40, 60) nach einem der vorhergehenden Ansprüche, **gekennzeichnet durch** einen mit der Korrektionseinheit (10) wirkverbundenen Fokussierantrieb (32), der eine durch die Verschiebung des Korrektionselementes (12) verursachte Defokussierung kompensiert.

6. Mikroskop (21, 40, 60) nach einem der vorhergehenden Ansprüche, **dadurch gekennzeichnet, dass** die Korrektionseinheit (10) eine Anpassungsoptik (15) enthält, die dem Korrektionselement (12) in dem Strahlengang nachgeordnet und derart ausgebildet ist, dass sie das durch das Korrektionselement (12) tretende Lichtbündel (16) kollimiert.

7. Mikroskop (21, 40, 60) nach Anspruch 6, **dadurch gekennzeichnet, dass** die Anpassungsoptik (15) derart ausgebildet ist, dass der Bündelquerschnitt des durch das Korrektionselement (12) tretenden Lichtbündels (16) an die Größe einer Objektivpupille anpassbar ist.

8. Mikroskop (21, 40, 60) nach Anspruch 6 oder 7, **dadurch gekennzeichnet, dass** die Anpassungsoptik (15) ein Zoomsystem umfasst.

9. Mikroskop (21, 40, 60) nach einem der vorhergehenden Ansprüche, **gekennzeichnet durch** ein optisches Element (36, 62) zum Erzeugen des konvergenten oder divergenten Bereichs (14) des Strahlengangs.

10. Mikroskop (21, 40, 60) nach Anspruch 9, **dadurch gekennzeichnet, dass** das optische Element eine Lichtleitfaser ist.

**Claims**

1. A microscope (21, 40, 60) comprising at least one correction unit (10) arranged in a beam path for correcting a variable spherical aberration,

wherein the microscope is a scanning microscope in which the at least one correction unit (10) is arranged between a main beam splitter (24) and a scanning module (26), or

the microscope is a scanning microscope in which the at least one correction unit (10) is arranged between a light source (22) and a scanning module (26) and/or between a detector (34) and the scanning module (26),

**characterized in that** the correction unit (10) comprises at least one optical correction element (12) that is arranged in a convergent or divergent area (14) of the beam path so as to be movable along the optical axis (O), and

the optical correction element (12) has at least one correction surface (18), the part of the at least one correction surface through which the convergent or divergent area (14) of the beam path passes forming a correction-effective surface section (20) whose radial extension crosswise to the optical axis (O) is adjustable by moving the correction element (12) along the optical axis (O),
wherein the correction surface (18) is formed by an elliptical paraboloid and is configured such that the change of the correction-effective surface section (20) caused by moving the correction element (12) along the optical axis (O) corrects the spherical aberration brought about by a refractive-index mismatch.

2. The microscope (21, 40, 60) according to claim 1, **characterized in that** the correction element (12) is an aspherical refractive element or a diffractive element.

3. The microscope (21, 40, 60) according to claim 1, **characterized in that** the surface form of the correction surface (18) of the aspherical refractive element is expressible on the basis of a polynomial expansion.

4. The microscope (21, 40, 60) according to one of the preceding claims, **characterized in that** the correction surface (18) is configured rotation-symmetrically around the optical axis (O).

5. The microscope (21, 40, 60) according to one of the preceding claims, **characterized by** a focus drive (32) that is operationally coupled to the correction unit (10) and that compensates for a defocusing caused by the movement of the correction element (12).

6. The microscope (21, 40, 60) according to one of the preceding claims, **characterized in that** the correction unit (10) has an adjustment lens (15) that is disposed behind the correction element (12) in the beam path and that is configured such that it collimates the light bundle (16) passing through the correction element (12).

7. The microscope (21, 40, 60) according to claim 6, **characterized in that** the adjustment lens (15) is configured such that the cross-section of the light bundle (16) passing through the correction element (12) is adaptable to the size of an objective pupil.

8. The microscope (21, 40, 60) according to claim 6 or 7, **characterized in that** the adjustment lens (15) comprises a zoom system.

9. The microscope (21, 40, 60) according to one of the preceding claims, **characterized by** an optical element (36, 62) for generating the convergent or divergent area (14) of the beam path.

10. The microscope (21, 40, 60) according to claim 9, **characterized in that** the optical element is a light-conducting fiber.

**Revendications**

1. Microscope (21, 40, 60) comprenant au moins une unité de correction (10) agencée dans un trajet optique et destinée à corriger une aberration sphérique variable,
le microscope étant un microscope à balayage dans lequel l'unité ou les unités de correction (10) sont agencées entre un diviseur de faisceau principal (24) et un module de balayage (26), ou
le microscope étant un microscope à balayage dans lequel l'unité ou les unités de correction (10) sont agencées entre une source de lumière (22) et un module de balayage (26) et/ou entre un détecteur (34) et le module de balayage (26),
**caractérisé en ce que** l'unité de correction (10) comporte au moins un élément de correction optique (12) qui est agencé dans une zone convergente ou divergente (14) du trajet optique de manière à pouvoir coulisser le long de l'axe optique (O), et
l'élément de correction optique (12) présente au moins une surface de correction (18) dont la partie traversée par la zone convergente ou divergente (14) du trajet optique forme une section de surface (20) agissant sur la correction, dont l'étendue radiale transversalement à l'axe optique (O) peut être modifiée en faisant coulisser l'élément de correction (12) le long de l'axe optique (O),
la surface de correction (18) étant formée d'un paraboloïde elliptique et étant réalisée de telle manière que la modification de la section de surface (20) agissant sur la correction, laquelle modification est provoquée par le coulissement de l'élément de correction (12) le long de l'axe optique (O), corrige l'aberration sphérique générée par une erreur d'adaptation de l'indice de réfraction.

**2.** Microscope (21, 40, 60) selon la revendication 1, **caractérisé en ce que** l'élément de correction (12) est un élément réfractif asphérique ou un élément diffractif.

**3.** Microscope (21, 40, 60) selon la revendication 1, **caractérisé en ce que** la forme superficielle de la surface de correction (18) de l'élément réfractif asphérique peut être représentée sur la base d'un développement polynomial.

**4.** Microscope (21, 40, 60) selon l'une quelconque des revendications précédentes, **caractérisé en ce que** la surface de correction (18) est formée à symétrie de rotation autour de l'axe optique (O).

**5.** Microscope (21, 40, 60) selon l'une quelconque des revendications précédentes, **caractérisé par** une commande de focalisation (32) qui est en liaison fonctionnelle avec l'unité de correction (10) et qui compense une défocalisation provoquée par le coulissement de l'élément de correction (12).

**6.** Microscope (21, 40, 60) selon l'une quelconque des revendications précédentes, **caractérisé en ce que** l'unité de correction (10) contient un adaptateur optique (15) qui est monté en aval de l'élément de correction (12) dans le trajet optique et qui est conçu de manière à collimater le faisceau lumineux (16) traversant l'élément de correction (12).

**7.** Microscope (21, 40, 60) selon la revendication 6, **caractérisé en ce que** l'adaptateur optique (15) est conçu de telle manière que la section transversale du faisceau lumineux (16) traversant l'élément de correction (12) peut être adaptée à la taille d'une pupille d'objectif.

**8.** Microscope (21, 40, 60) selon la revendication 6 ou 7, **caractérisé en ce que** l'adaptateur optique (15) comporte un système de grossissement.

**9.** Microscope (21, 40, 60) selon l'une quelconque des revendications précédentes, **caractérisé par** un élément optique (36, 62) destiné à générer la zone convergente ou divergente (14) du trajet optique.

**10.** Microscope (21, 40, 60) selon la revendication 9, **caractérisé en ce que** l'élément optique est une fibre optique.

Figur 1

Figur 2

Figur 3

Figur 4

## Figur 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0859259 A2
- US 8659827 B2
- WO 2012025349 A1
- US 2006291039 A1
- US 5978155 A
- DE 102005034441

**In der Beschreibung aufgeführte Nicht-Patentliteratur**

- **P. TÖRÖK ; P. VARGA ; G. NEMETH.** Analytical solution of the diffraction integrals and interpretation of wave-front distortion when light is focused through a planar interface between materials of mismatched refractive indices. *J. Opt. Soc. Am. A.,* 1995, vol. 12 (12), 2660-2671